(19) Europäisches Patentamt

European Patent Office

Office européen des brevets

(11) **EP 3 118 272 B1**

(12) # EUROPEAN PATENT SPECIFICATION

(45) Date of publication and mention of the grant of the patent:
**13.11.2019 Bulletin 2019/46**

(21) Application number: **15760800.1**

(22) Date of filing: **11.03.2015**

(51) Int Cl.:
*C09D 11/52* (2014.01)        *C09D 11/102* (2014.01)
*C09D 11/107* (2014.01)      *H01B 1/00* (2006.01)
*H01B 1/22* (2006.01)         *H01B 5/14* (2006.01)
*H01B 13/00* (2006.01)       *C09D 11/03* (2014.01)

(86) International application number:
**PCT/JP2015/057219**

(87) International publication number:
**WO 2015/137421 (17.09.2015 Gazette 2015/37)**

(54) **METHOD FOR PRODUCING SILVER NANOWIRE INK, SILVER NANOWIRE INK, AND TRANSPARENT ELECTROCONDUCTIVE COATING FILM**

VERFAHREN ZUR HERSTELLUNG VON SILBERNANODRAHTTINTE, SILBERNANODRAHTTINTE UND TRANSPARENTER ELEKTRISCH LEITENDER BESCHICHTUNGSFILM

PROCÉDÉ DE PRODUCTION D'ENCRE À BASE DE NANOFILS D'ARGENT, ENCRE À BASE DE NANOFILS D'ARGENT, ET FILM DE REVÊTEMENT ÉLECTROCONDUCTEUR TRANSPARENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2014 JP 2014052740**

(43) Date of publication of application:
**18.01.2017 Bulletin 2017/03**

(73) Proprietor: **DOWA Electronics Materials Co., Ltd.**
**Tokyo 101-0021 (JP)**

(72) Inventors:
• **KODAMA Daisuke**
  **Tokyo 101-0021 (JP)**

• **SAITO Hirotoshi**
  **Tokyo 101-0021 (JP)**
• **SATO Kimitaka**
  **Tokyo 101-0021 (JP)**

(74) Representative: **Emde, Eric**
**Wagner & Geyer Partnerschaft mbB**
**Patent- und Rechtsanwälte**
**Gewürzmühlstrasse 5**
**80538 München (DE)**

(56) References cited:
EP-A2- 2 594 613        JP-A- 2010 161 062
JP-A- 2010 161 062      JP-A- 2011 119 142
JP-A- 2013 016 455      JP-A- 2013 537 570
US-A1- 2009 130 433     US-A1- 2012 183 768

**Description**

Technical Field

The present invention relates to a method for producing a silver nanowires ink that is useful as a material for forming a transparent conductor, and the like. The invention also relates to the nanowires ink and a transparent conductive coated film using the same.

Background Art

In the description herein, an aggregate of minute metal wires having a thickness of approximately 200 nm or less is referred to as "nanowires". When the nanowires are compared to powder, the respective wire correspond to "particle" constituting the powder, and the nanowires correspond to "powder" as an aggregate of particles.

A transparent electrode using a transparent conductive film is an essential elemental technology of a touch-sensitive panel sensor mounted on various displays, smartphones, and tablets utilizing such techniques as liquid crystal, plasma, and organic electroluminescence, and various solar cells. As the material of the transparent conductive film, a metal oxide thin film represented by ITO has been mainly used.

A metal oxide thin film used in a transparent conductive film is generally produced by a vacuum vapor deposition method or a sputtering method, but the thin film is a metal oxide and thus has a defect of low resistance to bending, which may prevent the final product becoming flexible, and the like. A conductive film for a touch-sensitive panel sensor, which is one of the major applications of a transparent conductor, is demanded to have high transparency and high conductivity, and the demand in visibility thereof is also increasing in recent years. An ordinary ITO film necessarily has an increasing thickness for enhancing the conductivity thereof, but the increase of the thickness may decrease the transparency, and the visibility may not be improved. Furthermore, the vacuum vapor deposition method and the sputtering method have problems including large and complicated equipment due to the necessity of a vacuum environment, and consumption of a large amount of energy in the formation of the film, and there is a demand of development of a solution technique for the problems.

In response to the demands, the use of metal nanowires as the conductor of the transparent conductive film is proposed. In the case where metal nanowires are used as the conductor, the metal nanowires are in contact with each other to form a conductive network, thereby exhibiting conductivity. In the case where metal nanowires having a thickness of 50 nm or less and a length of 10 μm or more are used, both conductivity and transparency are achieved for the transparent conductive film. While Ag, Cu, Au and the like have been considered as the metal constituting the metal nanowires, it is considered that Ag is preferred since Ag is excellent in electroconductivity and oxidation resistance, and the metal cost thereof is not extremely high. Thus, techniques relating to silver nanowires have been actively developed.

Known production methods of silver nanowires include a method of dissolving a silver compound in a polyol solvent, such as ethylene glycol, and depositing metallic silver having a linear shape by utilizing the reduction power of the polyol as the solvent in the presence of a halogen compound and PVP (polyvinylpyrrolidone) as a protective agent (see for example US 2005/0056118 A1, U.S 2008/0003130 A1 or J. of Solid State Chem., 1992, 100, 272-280).

Attention is drawn to US 2012 183 768 A1, which discloses a coating composition used for forming a transparent conductive film. The coating composition comprises (1) at least one kind of materials selected from the group of metal nanowires and metal nanotubes as a first component, (2) a material selected from the group of polysaccharides and a derivative thereof as a second component, (3) a compound having at least one group selected from the group of a (block) isocyanate group, an amineimide group, an epoxy group, an oxetanyl group, an N-methylol group, an N-methylol ether group and an alkoxysilyl group as a third component, and (4) and water as a fourth component.

Summary of Invention

Technical Problem

In the description herein, a paint that contains silver nanowires dispersed in a solvent, contains a binder component, and has the properties, such as the viscosity, having been properly adapted to the coating method applied is referred to as a "silver nanowires ink". The operation of forming an ink having prescribed properties by adding a binder component, a viscosity modifier and the like to a liquid having silver nanowires dispersed therein is referred to as "ink formation". Although a silver nanowires ink is a dispersion liquid of silver nanowires, a liquid having a constitution obtained only by adding a silver nanowires ink to a solvent is referred to as a "silver nanowires dispersion liquid" for convenience of discrimination from an ink unless otherwise indicated.

Associated with the rapid spread of electronic devices using a touch-sensitive panel sensor in recent years, there is a strong demand of practical realization of a transparent conductor that is excellent in conductivity and transparency (light transmissibility), is good in visibility (haze characteristics), and is also excellent in flexibility, as a novel conductive material replacing a conductive metal oxide film, such as ITO. Silver nanowires are expected as a material that satisfies the severe demands. However, for providing a conductor film by using silver nanowires, such a process is required that an ink (coating material) containing silver nanowires is produced, and the ink is coated on a film substrate to form a transparent conductive film. For industrially performing the film forming process and preventing the resulting transparent conductive coated film from being peeled off from the substrate, such a silver nanowires ink is essential that is capable of sufficiently ensuring the adhesiveness among the silver nanowires and the adhesiveness between the silver nanowires and the substrate. For enhancing the adhesiveness, it is effective to add a binder component functioning as an "adhesive" to the silver nanowires ink. However, the addition of a binder component is liable to be a factor causing one of decrease of the conductivity, decrease of the light transmittance, and deterioration of the clear visibility due to light reflection (i.e., increase of the haze). The invention is to provide a technique having high industrial practicality for providing a transparent conductive coated film that is excellent in conductivity, light transmissibility, haze characteristics, and adhesiveness.

Solution to Problem

In accordance with the present invention, a method for producing a silver nanowires ink and a method for producing a transparent conductive coated film as set forth in claims 1 and 5 are is provided. Further embodiments are inter alia disclosed in the dependent claims.

For achieving the objects, the invention inter alia provides a method for producing a silver nanowires ink, containing adding a viscosity modifier and a water-soluble acrylic-urethane copolymer resin, to an aqueous solvent or a mixed solvent of water and an alcohol having silver nanowires dispersed therein. The content of silver with respect to the total amount of the silver nanowires ink is from 0.05 to 1.0% by mass.

The content of the water-soluble acrylic-urethane copolymer resin with respect to the total amount of the silver nanowires ink may be from 0.05 to 2.0% by mass. The content of the viscosity modifier with respect to the total amount of the silver nanowires ink is preferably from 0.01 to 1.0% by mass. The viscosity of the silver nanowires ink is preferably controlled to a range of from 1 to 100 mPa·s. The silver nanowires used preferably have an average diameter of 50 nm or less and an average length of 10 μm or more. Assuming that the ratio of the average length (nm) and the average diameter (nm) of the wire is referred to as an average aspect ratio, the average aspect ratio of the silver nanowires is preferably 250 or more.

The average diameter, the average length, and the average aspect ratio accord to the following definitions.

Average Diameter

In a projected image of one metal wire on a micrograph (for example, an FE-SEM micrograph), the diameters of inscribed circles tangent to the contours on both sides in the thickness direction are measured over the entire length of the wire, and the average value of the diameters is designated as the average diameter of the wire. The average value of the diameters of the respective wires constituting the nanowires is designated as the average diameter of the nanowire. The total number of the wires to be measured for calculating the average diameter is 100 or more.

Average Length

In a projected image of one metal wire on a micrograph as similar to the above, the length of the line passing through the center of the thickness of the wire (i.e., the center of the inscribed circle) from one end to the other end of the wire is designated as the length of the wire. The average value of the lengths of the respective wires constituting the nanowires is designated as the average length of the nanowires. The total number of the wires to be measured for calculating the average length is 100 or more.

The silver nanowires that are preferred in the invention are constituted by wires each having an extremely long and thin shape. The silver nanowires often exhibit a curved string form rather than a straight rod form. The inventors have developed software for measuring the wire length efficiently on the image for the curved wires, and have utilized the software for processing the data.

Average Aspect Ratio

The average diameter and the average length are substituted into the following expression (1) to calculate the average aspect ratio.

```
(average aspect ratio) =

(average length (nm))/(average diameter (nm))          (1)
```

The current disclosure also provides a silver nanowires ink containing silver nanowires dispersed in a mixed solvent of water and an alcohol, and a water-soluble acrylic-urethane copolymer resin added thereto as a binder component, and a dried coated film having a sheet resistance of from 40 to 60 Ω per square formed with the ink having a light transmittance of 98.5% or more. The haze thereof in this case may be, for example, 1.5% or less. The content of the silver nanowires is from 0.05 to 1.0% by mass. The viscosity thereof is preferably controlled, for example, to a range of from 1 to 100 mPa·s, and the surface tension thereof is preferably controlled, for example, to a range of from 10 to 80 mN/m. The silver nanowires ink contains the water-soluble acrylic-urethane copolymer resin in an amount, for example, of from 0.05 to 2.0% by mass. The amount of the viscosity modifier added may be, for example, from 0.01 to 1.0% by mass. The silver nanowires dispersed in the liquid preferably have an average diameter of 50 nm or less and an average length of 10 μm or more, and assuming that the ratio of the average length (nm) and the average diameter (nm) is referred to as an average aspect ratio, the average aspect ratio thereof is more preferably 250 or more. The average diameter, the average length, and the average aspect ratio accord to the aforementioned definitions.

In the description herein, a transparent conductive coated film is provided that is obtained by coating the silver nanowires ink on a substrate, and then drying, having a sheet resistance of from 40 to 60 Ω per square and a light transmittance of 98.5% or more, and preferably having a haze of 1.5% or less. The substrate may be, for example, glass, PET (polyethylene terephthalate), PEN (polyethylene naphthalate), PC (polycarbonate), PES (polyether sulfone), PAR (polyarylate), APO (amorphous polyolefin), or an acrylic resin.

Advantageous Effects of Invention

According to the invention, a transparent conductive coated film having excellent conductivity, excellent optical characteristics, and excellent coated film adhesiveness (durability) can be obtained by a method that is capable of being easily subjected to practical industrial use.

Brief Description of Drawing

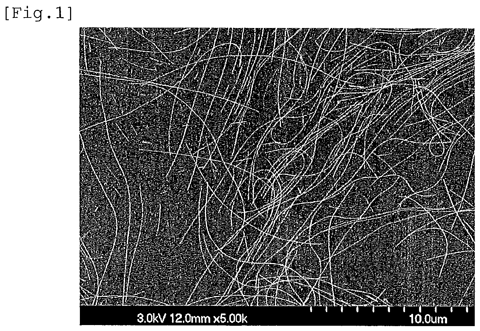

Fig. 1 is an SEM micrograph of the silver nanowires obtained in Example 1.

Description of Embodiments

The silver nanowires applied to the invention preferably have a shape that is thin and long as much as possible from the standpoint of the formation of a transparent conductive coated film excellent in conductivity and optical characteristics. Specifically, those having an average diameter of 50 nm or less, an average length of 10 μm or more, and an average aspect ratio of 250 or more are particularly preferred as described above. The applicant develops a production technique for stably providing the silver nanowires having a thin and long shape, and describes the same in Japanese Patent Application No. 2014-045754. According to the production technique, silver nanowires that are covered with a cationic organic protective agent can also be obtained. In particular, silver nanowires that are covered with a copolymer of vinylpyrrolidone and an additional monomer, preferably a copolymer of vinylpyrrolidone and an additional cationic monomer, can be achieved. Examples thereof provided include silver nanowires that are covered with a copolymer of vinylpyrrolidone and a diallyldimethylammonium salt monomer. The silver nanowires covered with the protective agent of these types have good dispersion retention property in a liquid medium, and are preferred as an ink material of the invention.

While the silver nanowires used in the invention are not limited to those according to the synthesis method described in Japanese Patent Application No. 2014-045754, the synthesis method is highly useful in the invention. Accordingly, the synthesis method will be briefly exemplified below.

Example of Synthesis Method of Silver Nanowires

A method of providing silver nanowires in an alcohol solvent having a silver compound dissolved therein, through the reduction power of the alcohol as the solvent in the presence of a halogen compound and an organic protective agent has been known. In this case, it is said that PVP is suitable as the organic protective agent for depositing metallic silver in a wire form. In the synthesis method described in Japanese Patent Application No. 2014-045754, silver nanowires are formed by utilizing the reduction power of the alcohol solvent. However, in the synthesis method, silver is reduction-deposited under the state where a chloride, a bromide, an aluminum salt, an alkali metal hydroxide, and an organic protective agent are dissolved in the alcohol solvent. At this time, the molar ratio Al/OH of the total Al amount of the aluminum salt dissolved in the solvent and the total hydroxide ion amount of the alkali metal hydroxide dissolved therein is from 0.01 to 0.40, and the molar ratio OH/Ag of the total hydroxide ion amount of the alkali metal hydroxide dissolved in the solvent and the total Ag amount of the silver compound dissolved therein is from 0.005 to 0.50.

The temperature where the reduction deposition reaction of silver is performed may be set in a range of 60°C or more and the boiling point of the solvent used or less. The boiling point herein is a boiling point under the pressure of the gas phase space in contact with the liquid surface of the solvent inside the reaction vessel. In the case where plural kinds of alcohols are used as the solvent, the temperature may be the boiling point of the alcohol having the lowest boiling point or less. From the standpoint that the reaction is performed moderately, however, the temperature is preferably controlled to a temperature lower than the boiling point for avoiding boiling. In the case where ethylene glycol is used as the solvent, and the reaction is performed under the atmospheric pressure, for example, the reaction is preferably performed at a temperature of from 60 to 185°C, and more preferably from 80 to 175°C, while ethylene glycol has a boiling point of approximately 197°C. The reaction time may be in a range of from 10 to 1,440 minutes.

As for the procedures, it is preferred that the substances except for the silver compound are dissolved in the alcohol solvent, and after the temperature of the solvent (which is hereinafter referred to as a solution A) reaches the prescribed reaction temperature, the silver compound is added to the solution A. The silver compound may be added in such a manner that the silver compound is dissolved in an alcohol solvent of the same kind as the aforementioned solvent in advance, and the silver-containing liquid (which is hereinafter referred to as a solution B) is mixed in the solution A. The solution B before mixing in solution A preferably has a temperature around ordinary temperature (for example, from 15 to 40°C). When the temperature of the solution B is too low, a long period of time may be required for dissolving the silver compound, and when the temperature thereof is too high, the reduction reaction of silver tends to occur before the step of mixing in the solution A due to the reduction power of the alcohol solvent in the solution B. A silver compound that is easily dissolved in the alcohol solvent, such as silver nitrate, may be added in the form of solid to the solution A. The method of adding the silver compound may be a method of adding the entire amount thereof at one time, and a method of adding intermittently or continuously over a certain period of time. The liquid is continuously stirred while the reaction proceeds. The atmosphere of the gas phase in contact with the liquid surface of the solution A while the reaction proceeds may be the air atmosphere or nitrogen.

After completing the deposition reaction of silver, a slurry containing silver nanowires is subjected to solid-liquid separation by such a measure as centrifugal separation or decantation, so as to recover the solid matter. The decantation may be performed by condensing while still standing over approximately 2 weeks. Water may be added to the slurry after the reaction. Since the slurry has large viscosity, the addition of water increases the liquid amount but decreases the viscosity to enhance the sedimentation rate, and consequently the period of time for condensation can be reduced. Furthermore, the condensation may be performed through the enhancement of the sedimentation rate by adding at least one of a solvent having small polarity, such as acetone, toluene, hexane, and kerosene, thereto. Water may be added for further decreasing the viscosity. In the case where centrifugal separation is applied for reducing the condensation time, the slurry after the reaction may be subjected directly to a centrifugal separator, so as to condense the silver nanowires. Moreover, the condensation time can be further reduced through the combination of the addition of a solvent having smaller polarity and the addition of water for decreasing the viscosity.

After condensing, the supernatant is removed. Thereafter, a solvent having large polarity, such as water and an alcohol, is added for redispersing the silver nanowires, and the solid matter is recovered by solid-liquid separation by such a measure as centrifugal separation or decantation. The procedure of redispersion and condensing (i.e., washing) is preferably performed repeatedly.

The solid matter after washing contains mainly the silver nanowires having the organic protective agent on the surface thereof. The silver nanowires may be stored in the form of a dispersion liquid containing the silver nanowires dispersed in a suitable liquid medium depending on the purpose. In the application to the method for producing a silver nanowires ink of the invention, a viscosity modifier and a binder component may be added to a silver nanowires dispersion liquid, which is obtained by dispersing the solid matter after washing in water, an alcohol or the like, so as to perform "ink formation" as described later.

Ink Formation

A silver nanowires dispersion liquid is prepared, and is regulated to have prescribed properties by adding a viscosity modifier and a binder component. At this time, in the invention, a water-soluble acrylic-urethane copolymer resin is added as the binder component. The preferred ink composition, properties, substances added, dispersion stability, and the like will be described below.

Ink Composition

In terms of mass proportion occupied in the total amount of the silver nanowires ink, the content of the silver nanowires is from 0.05 to 1.0% by mass, the amount of the viscosity modifier added is preferably from 0.01 to 1.0% by mass, and as for the amount of the binder component added, the amount of the water-soluble acrylic-urethane copolymer resin added as an active ingredient is preferably from 0.05 to 2.0% by mass. The solvent is preferably a mixture of water and an alcohol, in which the mass proportion of the alcohol is preferably from 5 to 40% by mass, and the balance is preferably water. The alcohol is preferably one having polarity of a solubility parameter (SP value) of 10 or more. For example, a low boiling point alcohol, such as methanol, ethanol, and isopropyl alcohol (2-propanol), is preferably used. The SP values thereof are said to be 23.4 for water, 14.5 for methanol, 12.7 for ethanol, and 11.5 for isopropyl alcohol.

Viscosity and Surface Tension

The silver nanowires ink may be excellent in coating property when the ink has a viscosity of from 1 to 100 mPa·s and a surface tension of from 20 to 80 mN/m.

Viscosity Modifier

The viscosity modifier applied to the invention is necessarily dissolved in water and an alcohol as a solvent. Various water-soluble polymers that have been used as a thickener in various fields may be used. Examples of the natural substance and a derivative thereof include a cellulose material and a derivative thereof, such as CMC (carboxymethylcellulose) and MC (methylcellulose), and a protein substance, such as albumin (a component of egg albumen) and casein (contained in milk). In addition, alginic acid, agar, starch, a polysaccharide, and the like may be used as the water-soluble thickener. Examples of the synthesis substance therefor include such polymers as a vinyl compound, a polyester compound, a polyvinyl alcohol compound, and a polyalkyleneoxide compound.

Binder

In the transparent conductive coated film obtained by coating the silver nanowires ink on a substrate and then drying, the adhesiveness among the silver nanowires and the adhesiveness between the silver nanowires and the substrate largely influence the yield in the production of the transparent conductive film, and thus are significantly important. For ensuring the adhesiveness, it is necessary to add a binder component functioning as an "adhesive". In the description herein, a transparent coated film that is obtained by coating the silver nanowires ink on a substrate and then drying in such a state that the respective wires integrally exhibit conductivity is referred to as a transparent conductive coated film.

The conductivity of the transparent conductive film (i.e., the adhered structure of the film substrate having on the surface thereof the transparent conductive coated film) is exhibited through the contact among metal of the silver nanowires constituting the transparent conductive coated film. The addition of the binder component to the silver nanowires ink may cause a possibility that the contact of metal of the wires is inhibited to fail to provide sufficient conduction. Accordingly, such a measure has been employed that a silver nanowires ink that does not contain a strong binder component is coated on a substrate and then drying to ensure the contact state among the wires, and then an overcoating agent containing an adhesive component is coated to ensure the adhesiveness of the transparent conductive coated film.

In the measure using the overcoating, however, the film having the silver nanowires ink coated thereon in the initial stage is generally passed repeatedly through the direction-changing portion with the roll in the furnace for ensuring the drying time. At the point passing the roll on the line, the substrate is bent, and thus the coated film receives stress, which may cause a possibility that the conductivity through the contact among the wires is deteriorated. For retaining the good conductivity, it is difficult to perform the operation with an increased line speed, and thus the enhancement of the productivity cannot be expected. Furthermore, for sending the film to the subsequent process step, such an operation may be frequently employed that the film is once wound up into a coil, which is then wound off in the later overcoating step. In this case, the surface of the coated film on the substrate receives stress on winding up and winding off, which may cause a possibility of reduction of the conductivity and peel off thereof from the substrate. Accordingly, even in the case where the overcoating is performed, it is necessary for enhancing the productivity that a certain binder component is added to the silver nanowires ink to enhance the adhesiveness among the wires and the adhesiveness between the substrate and the coated film. In the following description, the "adhesiveness" means both the adhesiveness among the wires and the adhesiveness between the substrate and the coated film, unless otherwise indicated.

The binder added to the silver nanowires ink is demanded to be excellent in conductivity, optical capability (high light transmissibility and small haze), and adhesiveness. However, it is not easy to achieve all of them at high levels. The binder is inherently an adhesive, and therefore improper selection thereof may cause intervention of the adhesive among the contact points of the silver nanowires to impair the conductivity largely. Furthermore, as a consequence of the use of the adhesive, a problem may occur that the silver nanowires stick to each other to facilitate aggregation.

As a result of the detailed investigations by the inventors, it has been found that in the silver nanowires ink, a water-soluble acrylic-urethane copolymer resin functions as a binder without impairing the dispersibility of the wires, and is significantly effective for forming a transparent conductive coated film that is excellent in conductivity, optical capability, and adhesiveness. Examples of an emulsion containing as a component thereof the water-soluble acrylic-urethane copolymer resin include "UC90", produced by Alberdingk Boley, Inc., "Adeka Bontighter HUX-401", produced by Adeka Corporation, and "NeoPac E-125", produced by DSM NeoResins, Inc. The amount thereof added to the ink is preferably such an amount that the amount of the water-soluble acrylic-urethane copolymer resin as an active ingredient is in a range of from 0.05 to 2.0% by mass with respect to the total amount of the ink.

Organic Protective Agent

For enhancing the dispersion stability of the silver nanowires in the liquid, an organic protective agent used in the synthesis of silver nanowires may be added depending on necessity. Examples of the water-soluble polymer therefor include PVP (polyvinylpyrrolidone), and a copolymer of vinylpyrrolidone and an additional monomer is also effective. In the case where the organic protective agent is added, it is more effective that a water-soluble organic protective agent having a molecular weight of 10,000 or more is added in an amount of from 0.01 to 1.0% by mass based on the total amount of the ink. The organic protective agent of this type has a large molecular weight and low activity, and does not function as a surfactant. Since the organic protective agent shows only a low adsorption force to the surface of silver, it is easily released off from the surface of silver through weak heating on drying, and the contact of silver is not inhibited.

Dispersion Stability of Silver Nanowires Ink

The dispersion stability can be evaluated in such a manner that while a container having the thus-produced silver nanowires ink housed therein is allowed to stand still, the inks that are collected from the specimen collecting port provided at a height of 1 cm from the bottom of the container immediately after the ink production and after the prescribed period of time each are coated on the substrate to form dried coated films, and the dried coated films are measured for sheet resistance. With an ink having good dispersion stability of the silver nanowires, the sheet resistance values obtained by coating the inks immediately after the production, after 4 hours, and after 8 hours show a considerably small change in sheet resistance of 10% or less. With an ink having poor dispersion stability, the concentration of the silver nanowires dispersed in the ink is lowered due to precipitation of the silver nanowires, and the ink concentration of the silver nanowires in the lower part of the container is increased. In the case where the liquid collected from the part close to the bottom of the container is used as described above, with an ink having poor dispersion stability, the content of the silver nanowires in the coated film is increased, and thus the sheet resistance value is lowered in the inks with an increased elapsed time, i.e., 4 hours and 8 hours. The ink having poor dispersion stability in a container is confirmed by visual observation to form a transparent supernatant after 8 hours. In the case where while further prolonging the standing still time after the production of the ink, for example, to 24 hours, the ink is collected from the specimen collecting port provided at a height of 1 cm from the bottom of the container, the silver nanowires ink is coated on the substrate to form dried coated film, and the dried coated film is compared for the sheet resistance and optical characteristics to the ink immediately after the production, larger changes may be observed, and thus it is favorable for the evaluation of the dispersion stability.

The dispersion stability is significantly important in the production of a transparent conductor. One of the important purposes of silver nanowires is a transparent conductive film. In the production process thereof, a silver nanoink is continuously coated on a PET film as a transparent substrate with a coating device in a roll-to-roll process, and the continuous coating time may be half a day at the longest. While the silver nanowires ink is housed in the ink tank of the coating device during that period of time, the silver nanowires may be deposited and aggregated in the ink tank if the silver nanowires have poor dispersion stability, and thus it may be difficult to form a coated layer having stable quality.

Storage Stability of Silver Nanowires Ink

In the case where the silver nanowires ink is stored for a long period of time (for example, 1 month), and then a dried coated film is formed by using the liquid in a uniformly dispersed state by shaking the container, the ink that suffers smaller deterioration of the optical characteristics (light transmittance and haze) in the comparison to the dried coated film having the equivalent sheet resistance produced with the liquid immediately after the ink formation can be evaluated as having excellent storage stability. According to the invention, the storage for 1 month may cause substantially no difference in optical characteristics from one immediately after the production.

Formation of Transparent Conductive Coated Film

The silver nanowires ink according to the invention may be coated on a surface of a substrate by a known method, such as a roll coater method. Thereafter, the coated film may be dried to provide a transparent conductive coated film having good adhesiveness. The drying may be performed in the air at from 80 to 150°C for approximately from 3 seconds to 3 minutes.

Examples

Example 1

Synthesis of Silver Nanowires

Propylene glycol as the alcohol solvent, silver nitrate, lithium chloride, potassium bromide, lithium hydroxide, aluminum nitrate nonahydrate, and a copolymer of vinylpyrrolidone and diallyldimethylammonium nitrate (the copolymer was formed with 99% by mass of vinylpyrrolidone and 1% by mass of diallyldimethylammonium nitrate, weight average molecular weight: 130,000) as the organic protective agent were prepared.

At room temperature, to 500 g of propylene glycol, 0.030 g of lithium chloride, 0.0042 g of potassium bromide, 0.030 g of lithium hydroxide, 0.0416 g of aluminum nitrate nonahydrate, and 5.24 g of the copolymer of vinylpyrrolidone and diallyldimethylammonium nitrate were added and dissolved to prepare a solution A. In a vessel separate therefrom, 4.25 g of silver nitrate was added and dissolved in 20 g of ethylene glycol to prepare a solution B.

The entire amount of the solution A was heated from ordinary temperature to 115°C under stirring, and then the entire amount of the solution B was added to the solution A over 1 minute with a tube pump. After completing the addition of the solution B, the solution was retained at 115°C for 24 hours while retaining the stirring condition. Thereafter, the reaction liquid was cooled to room temperature. After cooling, acetone in an amount 20 times the amount of the reaction liquid was added to the reaction liquid, and the reaction liquid was stirred for 10 minutes and then allowed to stand still for 7 days. After standing still, a condensed matter and a supernatant were observed, and the supernatant was carefully removed with a pipette to provide a condensed matter.

500 g of pure water was added to the resulting condensed matter, which was dispersed by stirring for 10 minutes, and then acetone in an amount of 10 times was added thereto, followed by stirring and then allowing to stand still for 24 hours. After standing still, a condensed matter and a supernatant were again observed, and the supernatant was carefully removed with a pipette. The excessive organic protective agent is unnecessary for providing good conductivity. Thus, the washing operation was performed 1 to approximately 20 times depending on necessity, thereby sufficiently washing the solid matter.

Pure water was added to the solid matter after washing to provide a dispersion liquid of the solid matter. The dispersion liquid was collected, and the observation of the dispersion liquid after evaporating pure water as a solvent on an observation stand with a high resolution FE-SEM (high resolution field emission scanning electron microscope) revealed that the solid matter was confirmed to be silver nanowires. Fig. 1 exemplifies the SEM micrograph of the silver nanowires. In the SEM observation, all the silver nanowires observed in five view fields selected arbitrarily were measured, and the average diameter and the average length were obtained according to the definitions described above. The total number of wires measured was 100 or more. The diameter was measured with micrographs imaged with the high resolution SEM at a magnification of 150,000, and the length was measured with micrographs imaged with the high resolution SEM at a magnification of 2,500.

As a result, the average diameter was 32 nm, the average length was 14 μm, and the average aspect ratio was 14,000 nm / 32 nm ≈ 438.

The silver nanowires dispersion liquid containing the silver nanowires dispersed in pure water was provided in this manner.

Ink Formation

Hydroxypropyl methylcellulose (HPMC) (produced by Alfa Aesar) was prepared as a viscosity modifier. Hydroxypropyl methylcellulose was not dissolved in water immediately, and hot water at 80°C was forcedly stirred with a stirrer in a separate vessel, to which a prescribed amount of hydroxypropyl methylcellulose was added and dispersed by stirring for 30 minutes while retaining at 80°C. Thereafter, 300g of cold water was added thereto, and the mixture was stirred for 5 hours to dissolve HPMC completely, thereby producing a HPMC aqueous solution having a concentration of 0.5% by mass.

An emulsion of a water-soluble acrylic-urethane copolymer resin (NeoPac E125, produced by DSM NeoResins, Inc.) was prepared as a binder.

Isopropyl alcohol was prepared for making a water-alcohol mixed solvent by mixing with water as the solvent of the silver nanowires dispersion liquid.

In one vessel with a lid, the silver nanowires dispersion liquid obtained above (containing water as the solvent), the HPMC aqueous solution, the water-soluble acrylic-urethane copolymer resin emulsion, and isopropyl alcohol were placed, and after closing the lid, the materials were mixed by shaking the vessel vertically 100 times. The mixture composition was that the mass ratio of water/isopropyl alcohol was 80/20, the amount of the HPMC component supplied from the HPMC aqueous solution was 0.10% by mass, and the amount of the water-soluble acrylic-urethane copolymer resin component shared from the emulsion was 0.25% by mass with respect to the total amount of the entire mixture. The mixing amounts were controlled in such a manner that the amount of metallic silver supplied from the silver nanowires was 0.3% by mass.

Thus, a silver nanowires ink was produced.

Silver Content

A specimen liquid having the silver nanowires in a dispersed state was collected from the resulting silver nanowires ink, and the silver nanowires were dissolved by adding nitric acid to the liquid and measured for the amount of silver by the ICP atomic emission spectroscopic analysis method (device: ICP atomic emission spectroscopic analyzer 720-ES, produced by Agilent Technologies Inc.). As a result, the silver content was 0.29% by mass, and thus a value substantially close to 0.3% by mass, the target value in the ink formation, was obtained. Accordingly, in Table 1 described later, the silver content is shown by the nominal value (target value) (which is the same in the following examples).

Viscosity and Surface Tension

A specimen liquid having the silver nanowires in a dispersed state was collected from the resulting silver nanowires ink, and measured for the viscosity with a rotation viscometer (HAAKE RheoStress 600, produced by Thermo Scientific, Inc., measurement cone: cone C60/1° Ti, D = 60 mm, plate: Meas. Plate cover MPC60). The viscosity with the rotator at 50 rpm was 10.4 mPa·s. The surface tension was measured with a full-automatic surface tension meter (CBVP-Z, produced by Kyowa Interface Science Co., Ltd.) and was 25.0 mN/m.

Formation of Transparent Conductive Coated Film

The silver nanowires ink was coated on a surface of a PET film (Lumirror UD03, produced by Toray Industries, Inc., thickness: 100μm) having a size of 5 cm × 5 cm with a bar coater No. 7 (produced by R. D. S. Webster, N. Y.). Thereafter, the ink was dried at 120°C for 1 minute with a convection thermostat chamber (DK43, produced by Yamato Scientific Co., Ltd.), thereby forming a transparent conductive coated film.

Sheet Resistance and Optical Characteristics

The sheet resistance of the transparent conductive coated film was measured with Loresta HP MCP-T410, produced by Mitsubishi Chemical Analytech Co., Ltd. The total light transmittance and the haze as the optical characteristics of the transparent conductive coated film were measured with Haze Meter NDH 5000, produced by Nippon Denshoku Industries Co., Ltd. The optical characteristics of only the coated film were measured by using the uncoated PET film as the reference specimen for the optical characteristics measurement. As a result, when the sheet resistance with the ink immediately after the production was 45 Ω per square, the transmittance (i.e., the transmittance of the transparent conductive coated film itself except for the PET film as the substrate) was 98.9%, and the haze was 1.0%. These values show excellent characteristics that sufficiently satisfy the demanded characteristics of a transparent conductive film for a touch-sensitive panel sensor.

After standing still the ink in a container for 24 hours, the ink was collected from the specimen collecting port provided at a height of 1 cm from the bottom of the container, and coated and dried on the PET film in the same manner as above, and the sheet resistance and the total light transmittance were measured. As a result, when the sheet resistance with the ink after standing still for 24 hours was 46 Ω per square, the transmittance was 98.9%, and the haze was 1.0%, and thus the characteristics were substantially not changed from the ink immediately after the production. It was thus confirmed that the ink had excellent dispersion stability.

Tape Peeling Test

The surface of the coated film of the specimen having been measured for the sheet resistance and the optical characteristics above was subjected to a test (tape peeling test), in which a cellophane adhesive tape having a width of 24 mm, produced by Nichiban Co., Ltd., (JIS Z1522) was adhered by pressing with fingers and then peeled off. The surface of the coated film after peeling was measured for the sheet resistance, and the resistance change rate (%) was obtained from the sheet resistance values before and after the test according to the following expression (2).

$$(\text{resistance change rate (\%)}) = (R_1 - R_0)/R_0 \times 100 \qquad (2)$$

In the expression, $R_0$ represents the sheet resistance ($\Omega$ per square) before the test, and $R_1$ represents the sheet resistance ($\Omega$ per square) after the test.

As a result, both $R_0$ and $R_1$ were 45 $\Omega$ per square, and thus the resistance change rate was 0%.

Abrasion Resistance Test

The abrasion resistance, i.e., the resistance against rubbing, is also important, in addition to the adhesiveness evaluated by the tape peeling test. The inventors have found that even when the adhesiveness evaluated by the tape peeling test is equivalent, there is a case where the ease of peeling of the silver nanowires on rubbing the coated film on the substrate is largely different. For performing the production with good productivity by increasing the line speed in an industrial mass production equipment, the durability is necessarily evaluated by a severer evaluation method, in which the coated film on the substrate is rubbed under application of an external physical force. The abrasion resistance was evaluated herein in the following manner.

Sponge was cut into a 1 cm cube, and to the bottom surface of the sponge piece, a rubber film of 1 cm × 1 cm, which was cut out from a natural rubber latex glove, Kuaratekku Glove available from AS ONE Corporation (latex-free, double chlorination, catalogue published by AS ONE Corporation "2013 General Research Equipments", part number 8-4053-01), was adhered as a slider with a double-sided adhesive tape. A clay piece as a weight was placed on the upper surface of the sponge piece to make a total weight of 80 g. A string was attached to one of the side surfaces of the sponge piece, and the surface thereof having the rubber film attached thereto was placed on the horizontal dried coated film of the silver nanowires ink formed on the surface of the substrate. The string was pulled horizontally at a speed of from 1 to 2 m/min, so as to rub the coated film with the rubber film as the slider. The rubbing operation was performed 5 times on the same portion of the coated film. The test of performing the rubbing operation 5 times is referred to as an "abrasion resistance test". The sheet resistance was measured before and after the abrasion resistance test, and the sheet resistance change rate (%) before and after the abrasion resistance test was obtained according to the expression (2). As a result, the sheet resistance change rate was 16%. When the sheet resistance change rate is 20% or less, it is evaluated that the transparent conductive coated film can be formed with high productivity by using general production equipment.

Storage Stability of Ink

The silver nanowires ink obtained above was placed in a transparent glass container and stored in a rack in the light in a laboratory room for 1 month. The container after storing for 1 month was shaken 100 times to disperse the silver nanowires sufficiently, and a transparent conductive coated film was formed by using the liquid in the aforementioned manner. When the sheet resistance of the resulting coated film was 44 $\Omega$ per square, the transmittance was 98.9%, and the haze was 1.0%, and thus it was confirmed that the ink had excellent storage stability. The coated film was subjected to the tape peeling test and the abrasion resistance test in the aforementioned manners. As a result, the resistance change rate before and after the tape peeling test was 5%, and the resistance change rate before and after the abrasion resistance test was 2%.

For the dried coated film obtained by using the liquid immediately after the ink formation, the sheet resistance, the transmittance, the haze, the resistance change rate before and after the tape peeling test, and the resistance change rate before and after the abrasion resistance test are shown in Table 1 (which is the same in the following examples).

Example 2

The experiment was performed under the same conditions as in Example 1 except that the silver nanowires ink was produced in such a manner that the content of the water-soluble acrylic-urethane copolymer resin component as the binder was 0.50% by mass. The resistance change rate before and after the abrasion resistance test was improved as compared to Example 1.

Example 3

The experiment was performed under the same conditions as in Example 1 except that the silver nanowires ink was produced in such a manner that the content of the water-soluble acrylic-urethane copolymer resin component as the binder was 0.75% by mass. The resistance change rate before and after the abrasion resistance test was improved as compared to Example 1.

Comparative Example 1

The experiment was performed under the same conditions as in Example 1 except that the silver nanowires ink was produced with no binder component added. The resistance change rate before and after the tape peeling test and the resistance change rate before and after the abrasion resistance test were largely deteriorated as compared to Examples.

Comparative Example 2

The experiment was performed under the same conditions as in Example 1 except that the silver nanowires ink was produced in such a manner that a water-soluble acrylic acid binder (AS-1100, produced by Toagosei Co., Ltd.) as a binder was added in an active ingredient amount of 0.50% by mass with respect to the total amount of the silver nanowires ink. As a result, the sheet did not provide conduction.

Comparative Example 3

The experiment was performed under the same conditions as in Example 1 except that the silver nanowires ink was produced in such a manner that a PEDOT/PSS dispersion liquid available from Sigma-Aldrich Corporation (Orgacon S305, produced by Agfa-Gvaert NV) as a binder was added in an active ingredient amount of 0.05% by mass with respect to the total amount of the silver nanowires ink. A good resistance change rate before and after the tape peeling test was obtained, but the resistance change rate before and after the abrasion resistance test was largely deteriorated as compared to Examples.

| Example No. | Silver nanowires ink | | | | | Dried coated film | | | | |
| --- | --- | --- | --- | --- | --- | --- | --- | --- | --- | --- |
| | Silver content (%10 by mass) | Viscosity modifier | | Binder | | Sheet resistance ($\Omega$ per square) | Optical characteristics | | Resistance change rate before and after tape peeling test (%) | Resistance change rate before and after abrasion resistance test (%) |
| | | Kind | Active ingredient content (% by mass) | Kind | Active ingredient content (% by mass) | | Transmittance (%) | Haze (%) | | |
| Example 1 | 0.3 | HPMC | 0.1 | NeoPacE125 | 0.25 | 45 | 98.9 | 1.0 | 0 | 16 |
| Example 2 | 0.3 | HPMC | 0.1 | NeoPacE125 | 0.50 | 44 | 99.0 | 1.0 | 0 | 2 |
| Example 3 | 0.3 | HPMC | 0.1 | NeoPacE125 | 0.75 | 49 | 98.7 | 1.1 | 1 | 2 |
| Comparative Example 1 | 0.3 | HPMC | 0.1 | (no addition) | 0.0 | 53 | 98.9 | 0.9 | 40 | 121 |
| Comparative Example 2 | 0.3 | HPMC | 0.1 | AS-1100 | 0.50 | (no conduction) | 98.8 | 2.1 | - | - |
| Comparative Example 3 | 0.3 | HPMC | 0.1 | PEDOT/PSS | 0.05 | 50 | 98.7 | 0.8 | 1 | 168 |

**Claims**

1. A method for producing a silver nanowires ink, comprising adding a viscosity modifier and a water-soluble acrylic-urethane copolymer resin, to an aqueous solvent or a mixed solvent of water and an alcohol having silver nanowires dispersed therein, wherein the content of silver with respect to the total amount of the silver nanowires ink is from 0.05 to 1.0% by mass.

2. The method for producing a silver nanowires ink according to claim 1, wherein the content of the water-soluble acrylic-urethane copolymer resin with respect to the total amount of the silver nanowires ink is from 0.05 to 2.0% by mass.

3. The method for producing a silver nanowires ink according to claim 1 or 2, wherein the content of the viscosity modifier with respect to the total amount of the silver nanowires ink is from 0.01 to 1.0% by mass.

4. The method for producing a silver nanowires ink according to any one of claims 1 to 3, wherein the silver nanowires dispersed in the liquid have an average diameter of 50 nm or less and an average length of 10 $\mu$m or more.

5. A method for producing a transparent conductive coated film comprising:

   coating a silver nanowires ink produced by the method according to any one of claims 1 to 4 containing silver nanowires, a mixed solvent of water and an alcohol, a viscosity modifier, and a water-soluble acrylic-urethane copolymer resin as a binder component onto a substrate, and
   drying the coated silver nanowires ink to obtain the transparent conductive coated film, wherein the film has a sheet resistance of from 40 to 60 $\Omega$ per square and a light transmittance of 98.5% or more.

6. The method according to claim 5, wherein the film has a sheet resistance of from 40 to 60 $\Omega$ per square, a light transmittance of 98.5% or more and a haze of 1.5% or less.

7. The method according to claim 5 or 6, wherein the content of the silver nanowires in the silver nanowires ink is from 0.05 to 1.0% by mass.

8. The method according to any one of claims 5 to 7, wherein the silver nanowires dispersed in the silver nanowires ink have an average diameter of 50 nm or less and an average length of 10 $\mu$m or more.

9. The method according to claim 8, wherein assuming that a ratio of the average length in nm and the average diameter in nm is referred to as an average aspect ratio, the average aspect ratio of the silver nanowires dispersed in the silver nanowires ink is 250 or more.

10. The method according to any one of claims 5 to 9, wherein the substrate is glass, PET (polyethylene terephthalate), PEN (polyethylene naphthalate), PC (polycarbonate), PES (polyether sulfone), PAR (polyarylate), APO (amorphous polyolefin), or an acrylic resin.

**Patentansprüche**

1. Verfahren zur Herstellung einer Silber-Nanodraht-Tinte, das das Hinzufügen eines Viskositätsmodifikators und eines wasserlöslichen Acryl-Urethan-Copolymerharzes zu einem wässrigen Lösungsmittel oder einem gemischten Lösungsmittel aus Wasser und einem Alkohol mit darin dispergierten Silber-Nanodrähten aufweist, wobei der Silbergehalt bezüglich der Gesamtmenge der Silber-Nanodraht-Tinte 0,05 bis 1,0 Massen-% beträgt.

2. Verfahren zur Herstellung einer Silber-Nanodraht-Tinte nach Anspruch 1, wobei der Gehalt des wasserlöslichen Acryl-Urethan-Copolymerharzes bezogen auf die Gesamtmenge der Silber-Nanodraht-Tinte 0,05 bis 2,0 Massen-% beträgt.

3. Verfahren zur Herstellung einer Silber-Nanodraht-Tinte nach Anspruch 1 oder 2, wobei der Gehalt des Viskositätsmodifikators bezogen auf die Gesamtmenge der Silber-Nanodraht-Tinte 0,01 bis 1,0 Massen-% beträgt.

4. Verfahren zur Herstellung einer Silber-Nanodraht-Tinte nach einem der Ansprüche 1 bis 3, wobei die in der Flüssigkeit dispergierten Silber-Nanodrähte einen durchschnittlichen Durchmesser von 50 nm oder weniger und eine durchschnittliche Länge von 10 $\mu$m oder mehr aufweisen.

5. Verfahren zur Herstellung eines transparenten leitfähigen beschichteten Films, das Folgendes aufweist:

Aufbringen einer nach dem Verfahren hergestellten Silber-Nanodraht-Tinte nach einem der Ansprüche 1 bis 4, die Silber-Nanodrähte, ein gemischtes Lösungsmittel aus Wasser und Alkohol, einen Viskositätsmodifikator und ein wasserlösliches Acryl-Urethan-Copolymerharz als Bindemittelkomponente aufweist, auf ein Substrat und

Trocknen der aufgebrachten Silber-Nanodraht-Tinte, um den transparenten leitfähigen beschichteten Film zu erhalten, wobei der Film einen Schichtwiderstand von 40 bis 60 $\Omega$ pro Quadrat und eine Lichtdurchlässigkeit von 98,5% oder mehr aufweist.

6. Verfahren nach Anspruch 5, wobei der Film einen Schichtwiderstand von 40 bis 60 $\Omega$ pro Quadrat, eine Lichtdurchlässigkeit von 98,5% oder mehr und eine Trübung von 1,5% oder weniger aufweist.

7. Verfahren nach Anspruch 5 oder 6, wobei der Gehalt der Silber-Nanodrähte in der Silber-Nanodraht-Tinte 0,05 bis 1,0 Massen-% beträgt.

8. Verfahren nach einem der Ansprüche 5 bis 7, wobei die in der Silber-Nanodraht-Tinte dispergierten Silber-Nanodrähte einen durchschnittlichen Durchmesser von 50 nm oder weniger und eine durchschnittliche Länge von 10 $\mu$m oder mehr aufweisen.

9. Verfahren nach Anspruch 8, wobei unter der Annahme, dass ein Verhältnis der durchschnittlichen Länge in nm und des durchschnittlichen Durchmessers in nm als durchschnittliches Seitenverhältnis bezeichnet wird, das durchschnittliche Seitenverhältnis der in der Silber-Nanodrahttinte dispergierten Silber-Nanodrähte 250 oder mehr beträgt.

10. Verfahren nach einem der Ansprüche 5 bis 9, wobei das Substrat Glas, PET (Polyethylenterephthalat), PEN (Polyethylennaphthalat), PC (Polycarbonat), PES (Polyethylensulfon), PAR (Polyarylat), APO (amorphes Polyolefin) oder ein Acrylharz ist.

**Revendications**

1. Procédé de fabrication d'une encre à nanofils d'argent, comprenant l'ajout d'un modificateur de viscosité et d'une résine copolymère acrylique/uréthane soluble dans l'eau, à un solvant aqueux ou à un solvant mélangé d'eau et d'un alcool dans lequel des nanofils d'argent sont dispersés, dans lequel la teneur en argent par rapport à la quantité totale de l'encre à nanofils d'argent est comprise entre 0,05 et 1,0 % en masse.

2. Procédé de fabrication d'une encre à nanofils d'argent selon la revendication 1, dans lequel la teneur en résine copolymère acrylique/uréthane soluble dans l'eau par rapport à la quantité totale de l'encre à nanofils d'argent est comprise entre 0,05 et 2,0 % en masse.

3. Procédé de fabrication d'une encre à nanofils d'argent selon la revendication 1 ou 2, dans lequel la teneur en modificateur de viscosité par rapport à la quantité totale de l'encre à nanofils d'argent est comprise entre 0,01 et 1,0 % en masse.

4. Procédé de fabrication d'une encre à nanofils d'argent selon l'une quelconque des revendications 1 à 3, dans lequel les nanofils d'argent dispersés dans le liquide ont un diamètre moyen de 50 nm ou moins et une longueur moyenne de 10 $\mu$m ou plus.

5. Procédé de fabrication d'un film déposé conducteur transparent comprenant les étapes suivantes :

le dépôt d'une encre à nanofils d'argent produite par le procédé selon l'une quelconque des revendications 1 à 4 contenant des nanofils d'argent, un solvant mélangé d'eau et d'un alcool, un modificateur de viscosité, et une résine copolymère acrylique/uréthane soluble dans l'eau en tant que composant liant sur un substrat, et le séchage de l'encre à nanofils d'argent déposée pour obtenir le film déposé conducteur transparent, dans lequel le film a une résistance de feuille de 40 à 60 $\Omega$ par carré et un facteur de transmission de la lumière de 98,5 % ou plus.

6. Procédé selon la revendication 5, dans lequel le film a une résistance de feuille de 40 à 60 Ω par carré et un facteur de transmission de la lumière de 98,5 % ou plus et un voile de 1,5 % ou moins.

7. Procédé selon la revendication 5 ou 6, dans lequel la teneur en nanofils d'argent dans l'encre à nanofils d'argent est comprise entre 0,05 et 1,0 % en masse.

8. Procédé selon l'une quelconque des revendications 5 à 7, dans lequel les nanofils d'argent dispersés dans l'encre à nanofils d'argent ont un diamètre moyen de 50 nm ou moins et une longueur moyenne de 10 μm ou plus.

9. Procédé selon la revendication 8, dans lequel, en supposant qu'un rapport de la longueur moyenne en nm et du diamètre moyen en nm soit considéré comme étant un rapport de forme moyen, le rapport de forme moyen des nanofils d'argent dispersés dans l'encre à nanofils d'argent est 250 ou plus.

10. Procédé selon l'une quelconque des revendications 5 à 9, dans lequel le substrat est en verre, PET (polyéthylène téréphtalate), PEN (polyéthylène naphtalate), PC (polycarbonate), PES (polyéthersulfone), PAR (polyarylate), APO (polyoléfine amorphe), ou une résine acrylique.

[Fig.1]

3.0kV 12.0mm x5.00k                    10.0um

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050056118 A1
- US 20080003130 A1
- US 2012183768 A1
- JP 2014045754 A

**Non-patent literature cited in the description**

- *J. of Solid State Chem.,* 1992, vol. 100, 272-280